# EUROPÄISCHE PATENTSCHRIFT

(11) **EP 3 173 557 B1**
(45) Veröffentlichungstag und Bekanntmachung des Hinweises auf die Patenterteilung: **14.03.2018**
(21) Anmeldenummer: 16198123.8
(22) Anmeldetag: 10.11.2016
(51) Int. Cl.: E05D 5/06, E05D 3/02, E05D 11/06

(54) **BAND FÜR TÜREN ODER FENSTER**
HINGE FOR DOORS OR WINDOWS
PENTURE POUR PORTE OU FENÊTRE

(30) Priorität: 26.11.2015 DE 102015120555
(43) Veröffentlichungstag der Anmeldung: 31.05.2017
(73) Patentinhaber: Simonswerk GmbH, D-33378 Rheda-Wiedenbrück (DE)
(72) Erfinder: KNÖCHEL, Jens, 33330 Gütersloh (DE)
(74) Vertreter: Lorenz, Bernd Ingo Thaddeus

(56) Entgegenhaltungen:
- JP-A- S6 370 789
- US-A- 2 078 815
- US-A1- 2008 263 827

## Beschreibung

Die Erfindung betrifft ein Band für Türen oder Fenster mit einem Aufnahmekörper und mit einem Scharnierbügel, der innerhalb des Aufnahmekörpers um eine Gelenkachse drehbeweglich gelagert ist, wobei die Gelenkachse im Aufnahmekörper entlang einer Führungsbahn verschiebbar geführt ist und wobei der Scharnierbügel ein Anschlussende mit einem Zahnkranz aufweist, welcher bei einer Schwenkbewegung des Scharnierbügels um seine Gelenkachse zwischen einer Bandschließstellung und einer Bandöffnungsstellung an einer an der Innenseite des Aufnahmekörpers angeordneten gezahnten Lauffläche abrollt, wobei der Scharnierbügel eine Anschlagfläche aufweist, die in der Bandschließstellung an einer bodenseitiger Fläche des Aufnahmekörpers anliegt.

Das Band ist bei geschlossener Tür bzw. geschlossenem Fenster verdeckt zwischen Zarge und Flügel angeordnet und von außen nicht sichtbar. Ein bevorzugtes Einsatzgebiet für das Band sind Türen für Wohn- und Büroräume sowie Objekttüren bzw. Gebäudeabschlusstüren. Das Band ist bei gefälzten und flächenbündigen Türen einsetzbar und ermöglicht ein Öffnen des Türflügels um mindestens 100°. Die Öffnungsbewegung ist verbunden mit einer translatorischen Bewegung des Scharnierbügels. Das Ergebnis der beiden Bewegungen ist eine Drehschubbewegung dergestalt, dass bei einer Schwenkbewegung des Türflügels eine seitliche Verstellung des Türflügels relativ zur Türzarge überlagert wird. Entsprechendes gilt, wenn das Band für Fenster oder sonstige Gebäudeabschlüsse eingesetzt wird.

Ein Band mit den eingangs beschriebenen Merkmalen ist aus EP 1 400 646 B1 bekannt. Der Zahnkranz der bekannten Anordnung hat die Querschnittsform eines Kreises. Beim Öffnen einer mit dem Türband ausgestatteten Tür ist der Schwenkbewegung des Türflügels eine Seitenverstellung des Türflügels überlagert, wobei der Drehwinkel und die Linearverstellung in einem von der Winkelstellung unabhängigen konstanten Verhältnis stehen. Die Kinematik erfordert einen großen Einbauraum und ist daher noch verbesserungsbedürftig. Zu Beginn einer Öffnungsbewegung aus der Bandschließposition heraus sollten der Anteil der Drehbewegung und der translatorischen Bewegung in einem anderen Verhältnis stehen als zum Ende der Öffnungsbewegung. Ein weiterer Nachteil des bekannten Türbandes ist darin zu sehen, dass die beweglichen Glieder des Türbandes auch im Bandschließzustand den auf den Türflügel wirkenden Kräften ausgesetzt sind und der Bandschließzustand daher relativ instabil ist.

Darüber hinaus ist aus US 2 078 815 A ein Türband mit den eingangs beschriebenen Merkmalen bekannt.

Vor diesem Hintergrund liegt der Erfindung die Aufgabe zugrunde, ein Band für Türen oder Fenster mit dem zuvor beschriebenen Aufbau anzugeben, das im Bandschließzustand große Kräfte stabil aufnimmt und bei dessen Öffnungsbewegung eine Linearbewegung und eine Drehbewegung so überlagert sind, dass der Aufnahmekörper mit einer geringeren Breite ausgebildet werden kann.

Gegenstand der Erfindung und Lösung dieser Aufgabe ist ein Band für Türen oder Fenster mit den Merkmalen des Anspruchs 1.

Erfindungsgemäß weist der Scharnierbügel eine Anschlagfläche auf, die in der Bandschließstellung an einer bodenseitigen Fläche des Aufnahmekörpers anliegt. Durch den Kontakt zwischen der Anschlagfläche des Scharnierbügels und der bodenseitigen Fläche des Aufnahmekörpers nimmt der Scharnierbügel in der Bandschließstellung eine definierte Lage ein, wobei große Kräfte übertragen werden können. Ferner hat der Zahnkranz am Anschlussende des Scharnierbügels die Form einer Parabel oder eines Abschnittes einer Ellipse, deren lange Halbachse in der Bandschließstellung senkrecht zur gezahnten Lauffläche an der Innenseite des Aufnahmekörpers ausgerichtet ist. Bei einer Schwenkbewegung des Scharnierbügels aus der Bandschließstellung heraus wird zugleich eine translatorische Bewegung ausgeführt, wobei durch die erfindungsgemäße Gestaltung des Zahnkranzes zunächst eine signifikante Drehbewegung einsetzt und mit zunehmendem Drehwinkel eine progressiv zunehmende translatorische Verstellung der Gelenkachse hinzukommt. Durch die erfindungsgemäße Kinematik nimmt die Gelenkanordnung innerhalb des Aufnahmekörpers nur einen geringen Bauraum in Anspruch.

Die gezahnte Lauffläche ist zweckmäßig an einer Seitenwand des Aufnahmekörpers angeordnet, die sich im Einbauzustand parallel zu einer Tür- oder Fensteröffnung erstreckt. Der "Einbauzustand" meint die Anordnung des Bandes an einer Tür bzw. einem Fenster.

Gemäß einer bevorzugten Ausführung der Erfindung besteht der Zahnkranz aus einem geräuschdämpfenden Material, vorzugsweise aus Kunststoff. Durch eine geeignete Werkstoffpaarung zwischen dem Material des Zahnkranzes und der an der Innenseite des Aufnahmekörpers angeordneten gezahnten Lauffläche können ein geringer Verschleiß und ein geringes Abrollgeräusch beim Öffnen und Schließen des Türbandes gewährleistet werden. Der vorzugsweise aus Kunststoff bestehende Zahnkranz kann als austauschbares Teil formschlüssig mit dem Scharnierbügel verbunden sein. Alternativ kann der Zahnkranz durch eine Klebeverbindung oder durch Anvulkanisieren mit dem Scharnierbügel fest verbunden sein. Anstelle von Kunststoff sind grundsätzlich auch andere Lagermaterialien einsetzbar.

Der Aufnahmekörper besteht vorzugsweise aus einem Metallgussteil, wobei die gezahnte Lauffläche zweckmäßig an dem Metallgussteil angeformt ist.

An einer oberen Stirnseite und einer unteren Stirnseite des Scharnierbügels ist zweckmäßig jeweils ein Führungselement in Form einer Rolle oder eines Gleitschuhs angeordnet, welches in einer dem Aufnahmekörper zugeordneten Führungsbahn linear beweglich geführt ist. Der Aufnahmekörper kann separate Lagereinsätze aufweisen, an denen die Führungsbahnen vorgesehen sind. Die separaten Lagereinsätze sind zweckmäßig austauschbar im Aufnahmekörper angeordnet. Im Rahmen der Erfindung liegt es auch, dass die Lagereinsätze verstellbar in dem als Gehäuse ausgebildeten Aufnahmekörper angeordnet sind.

Die geometrische Gestaltung des Scharnierbügels hat Einfluss auf den Öffnungswinkel des Bandes. Zweckmäßig weist der Scharnierbügel zwischen dem mit dem Zahnkranz versehenen Anschlussende und einem frei vorstehenden Ende ein bogenförmig gekrümmtes Mittelstück auf, welches in der Bandöffnungsstellung einen oberen Rand des Aufnahmekörpers umgreift. Der Scharnierbügel ist so gestaltet, dass der maximale Öffnungswinkel des Bandes mindestens 100° und vorzugsweise mehr als 100° beträgt.

Der Aufnahmekörper des erfindungsgemäßen Bandes weist zweckmäßig zwei durch eine Bodenfläche verbundene Seitenwände auf, wobei an einer ersten Seitenwand die gezahnte Lauffläche angeordnet ist und wobei die zweite Seitenwand vorzugsweise eine Öffnung aufweist, in welche das bogenförmig gekrümmte Mittelstück des Scharnierbügels eintaucht, wenn der Scharnierbügel seine Schließposition einnimmt. Die beschriebene Anordnung führt zu einer besonders kompakten Gestaltung des Bandes und ermöglicht eine Minimierung des Aufnahmeraums des Aufnahmekörpers.

Im Folgenden wird die Erfindung anhand einer lediglich ein Ausführungsbeispiel darstellenden Zeichnung erläutert. Es zeigen schematisch
- Fig. 1A bis 1D: einen Schnitt durch ein Türband in verschiedenen Funktionsstellungen zwischen einer Bandschließstellung und einer Bandöffnungsstellung,
- Fig. 2: eine perspektivische Darstellung des Türbandes in der Bandschließstellung,
- Fig. 3: einen Aufnahmekörper des in Fig. 2 dargestellten Türbands,
- Fig. 4 und 5: Bestandteile eines Scharnierbügels des in Fig. 2 dargestellten Türbandes.

In den Figuren ist ein Türband für eine verdeckte Anordnung zwischen Türzarge und Türflügel dargestellt. Das Türband umfasst einen Aufnahmekörper 1 sowie einen Scharnierbügel 2, der innerhalb des Aufnahmekörpers 1 um eine Gelenkachse 3 drehbeweglich gelagert ist. Dabei ist die Gelenkachse 3 im Aufnahmekörper 1 entlang einer Führungsbahn 4 verschiebbar geführt. Der Scharnierbügel 2 weist ein Anschlussende mit einem Zahnkranz 5 auf, welcher bei einer Schwenkbewegung des Scharnierbügels 2 um seine Gelenkachse 3 zwischen einer Bandschließstellung und einer Bandöffnungsstellung an einer an der Innenseite des Aufnahmekörpers 1 angeordneten gezahnten Lauffläche 6 abrollt.

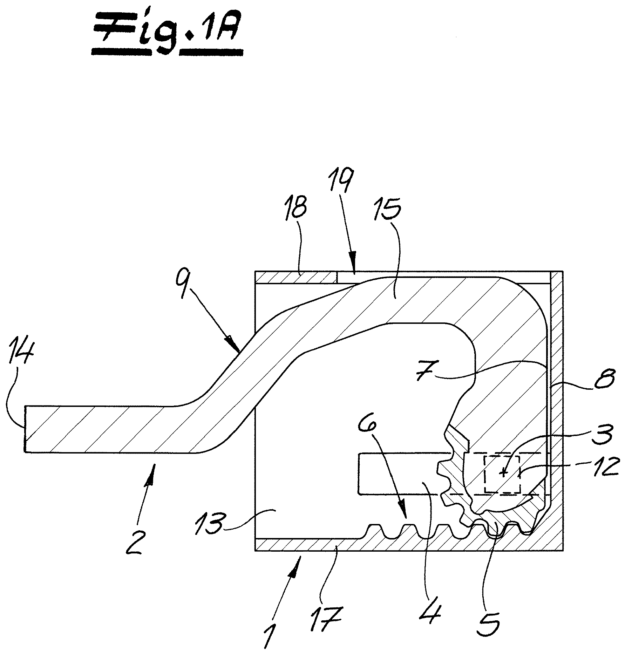

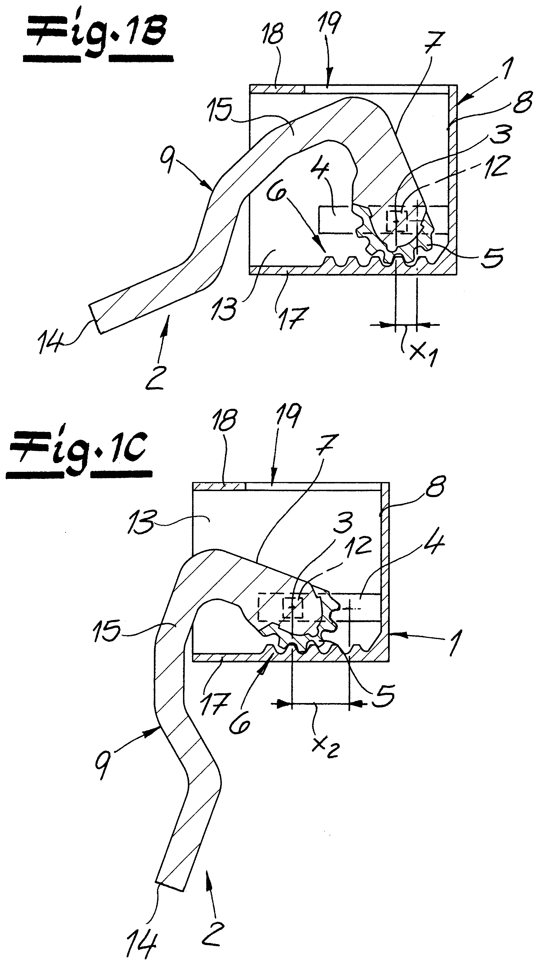

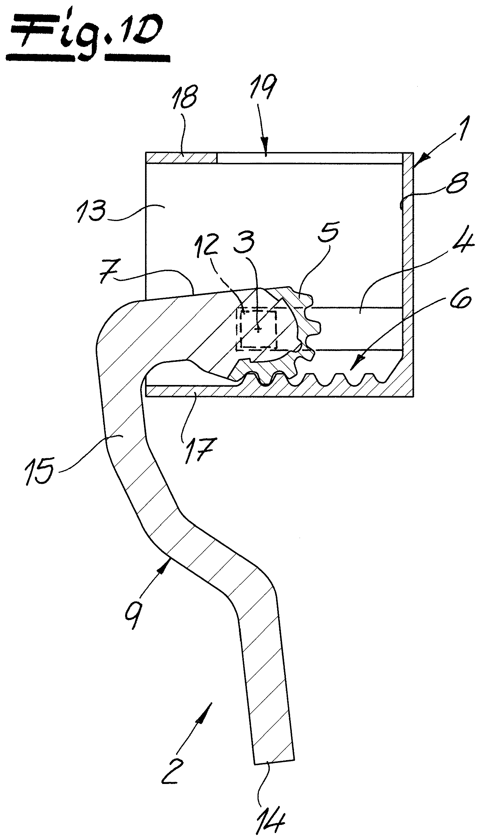

Die Fig. 1A zeigt die Bandschließstellung und die Fig. 1D die Bandöffnungsstellung des Türbandes. In der Bandöffnungsstellung nimmt das Türband den maximalen Öffnungswinkel ein. Der maximale Öffnungswinkel beträgt zumindest 100°. Die Fig. 1B und 1C zeigen Zwischenstellungen, die bei einer Öffnungsbewegung des Türbandes durchlaufen werden. In Fig. 1B beträgt der Öffnungswinkel etwa 35° und in Fig. 1C etwa 70°. Aus einer vergleichenden Betrachtung der Fig. 1A bis 1D ist ersichtlich, dass bei einer Schwenkbewegung des Scharnierbügels 2 um seine Gelenkachse 3 zeitgleich eine translatorische Bewegung x der Gelenkachse 3 entlang der Führungsbahn 4 ausgeführt wird. Das Ergebnis der beiden Bewegungen ist eine Drehschubbewegung, wobei der Scharnierbügel 2 bis zu dem in Fig. 1B dargestellten Öffnungswinkel von etwa 35° eine nach auswärts gerichtete Seitenbewegung relativ zum Aufnahmekörper 1 ausführt und sich mit zunehmendem Öffnungswinkel dann wieder an den Aufnahmekörper 1 annähert (Fig. 1D und 1C). Durch diese Kinematik eignet sich das Türband insbesondere für gefälzte Türflügel und flächenbündig mit der Türzarge abschließende Türflügel.

Der Scharnierbügel 2 weist eine Anschlagfläche 7 auf, die in der in Fig. 1A dargestellten Bandschließstellung an einer bodenseitigen Fläche 8 des Aufnahmekörpers 1 anliegt. Ein etwaiges Drehmoment, welches in Schließrichtung wirkt, wird in der Bandschließstellung unmittelbar von dem Scharnierbügel 2 in den Aufnahmekörper 1 abgeleitet, ohne dass die drehbeweglichen Teile des Türbandes belastet werden. Es resultiert eine stabile Bandschließstellung.

Der am Anschlussende des Scharnierbügels 2 angeordnete Zahnkranz 5 hat die Form eines Abschnittes einer Ellipse, deren lange Halbachse in der Bandschließstellung senkrecht zu der gezahnten Lauffläche 6 an der Innenseite des Aufnahmekörpers ausgerichtet ist. Die gezahnte Lauffläche 6 befindet sich an einer Seitenwand des Aufnahmekörpers 1, welcher sich im Einbauzustand parallel zur Türöffnung erstreckt. Die elliptische Form des Zahnkranzes 5 hat zur Folge, dass bei einer Öffnungsbewegung aus der in Fig. 1A dargestellten Bandschließstellung heraus bis zu der in Fig. 1B dargestellten Zwischenposition zunächst eine signifikante Drehbewegung einsetzt, wobei die translatorische Bewegung der Gelenkachse 3 nur einen kleinen Stellweg x₁ zurücklegt. Mit zunehmendem Drehwinkel kommt eine progressiv zunehmende translatorische Verstellung der Gelenkachse 3 hinzu. Aus einer vergleichenden Betrachtung der in Fig. 1B und Fig. 1C dargestellten Funktionsstellungen geht hervor, dass bei einer Verdopplung des Drehwinkels von 35° auf 70° ein translatorischer Weg x₂ der Gelenkachse 3 resultiert, der mehr als das Zweifache des Weges x₁ beträgt. Die Gelenkachse 3 wandert weiter nach außen, bis bei dem maximalen Öffnungswinkel von zumindest 100° die in Fig. 1D dargestellte Funktionsstellung erreicht ist. Die elliptische Form des Zahnkranzes 5 ermöglicht die Realisierung eines an die Schwenkbewegung gekoppelten großen nach außen gerichteten Stellweges in einem Aufnahmekörper 1, der sich durch einen geringen Bauraum auszeichnet.

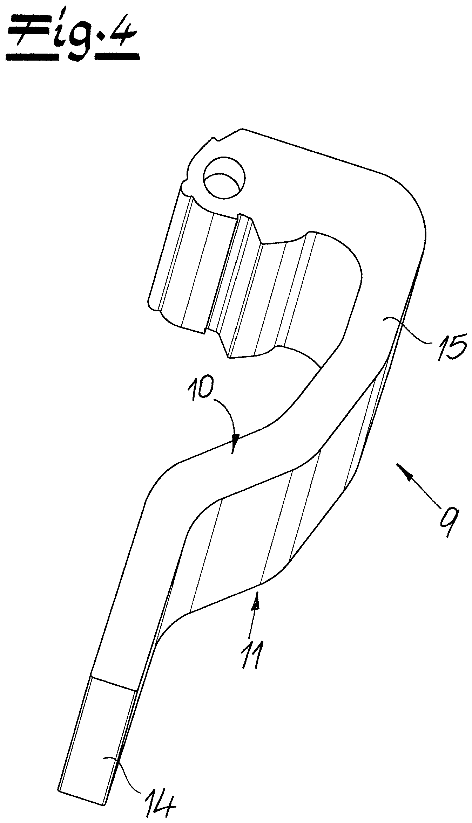

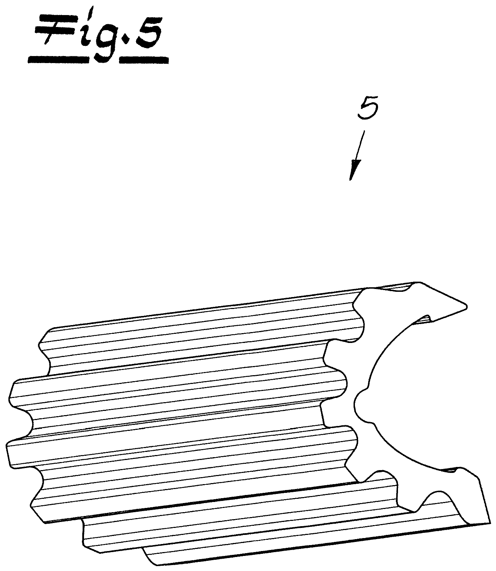

Der Zahnkranz 5 besteht aus Kunststoff oder einem anderen geeigneten Material, welches Abrollgeräusche dämpft und eine möglichst wartungsfreie Bewegung ermöglicht. Aus einer vergleichenden Betrachtung der Fig. 4 und 5 geht hervor, dass der Zahnkranz 5 aus einem separaten Kunststoffteil besteht, welches auf einen Metallkörper 9 des Scharnierbügels 2 aufgesteckt oder aufgeclipst wird. Der Zahnkranz 5 und der Metallkörper 9 des Scharnierbügels 2 sind formschlüssig und drehfest miteinander verbunden. Im Rahmen der Erfindung liegt es auch, dass der Zahnkranz 5 durch Aufvulkanisieren mit dem Metallkörper 9 unlösbar verbunden wird.

Der Aufnahmekörper 1 hat die Form eines Gehäuses und besteht aus einem Metallgussteil, wobei die gezahnte Lauffläche 6 an dem Metallgussteil angeformt ist. Es versteht sich, dass die gezahnte Lauffläche 6 alternativ auch aus einem vorgefertigten Zahnprofil bestehen kann, welches an dem Aufnahmekörper 1 in geeigneter Weise befestigt wird.

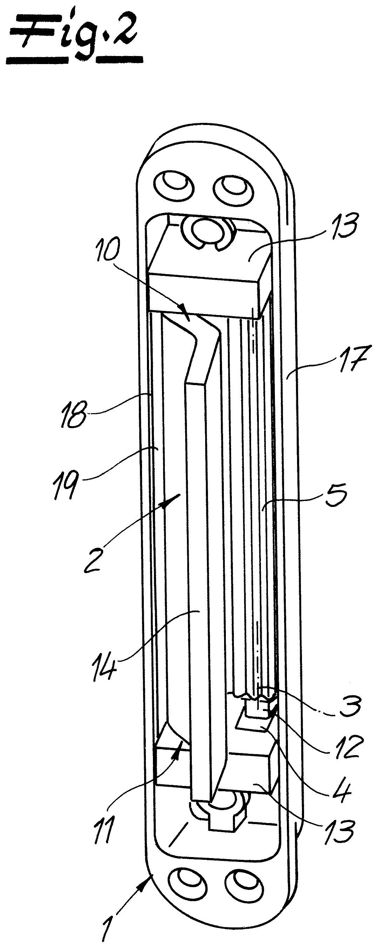

An einer oberen Stirnseite 10 des Scharnierbügels 2 und an einer unteren Stirnseite 11 des Scharnierbügels 2 ist jeweils ein Führungselement 12 in Form einer Rolle oder eines Gleitschuhs angeordnet, welches in einer am Aufnahmekörper 1 angeordneten Führungsbahn 4 linear beweglich geführt ist. Die Führungsbahn 4 erstreckt sich parallel zu der im Aufnahmekörper angeordneten gezahnten Lauffläche 6. Insbesondere aus der Darstellung in Fig. 2 ist ersichtlich, dass der Aufnahmekörper 1 separate Lagereinsätze 13 aufweist, an denen jeweils eine Führungsbahn 4 vorgesehen ist. Die Lagereinsätze 13 sind mit dem Gehäuse des Aufnahmekörpers 1 verschraubt. Es können Stelleinrichtungen vorgesehen sein, die eine Positionsverstellung in zumindest einer Achsrichtung relativ zum Aufnahmekörper 1 ermöglichen.

Aus den Fig. 1A und 1D geht hervor, dass der Scharnierbügel 2 zwischen dem mit dem Zahnkranz 5 versehenen Anschlussende und einem frei vorstehenden Ende 14 ein bogenförmig gekrümmtes Mittelstück 15 aufweist, welches in der Bandöffnungsstellung (Fig. 1D) einen oberen Rand des Aufnahmekörpers 1 umgreift.

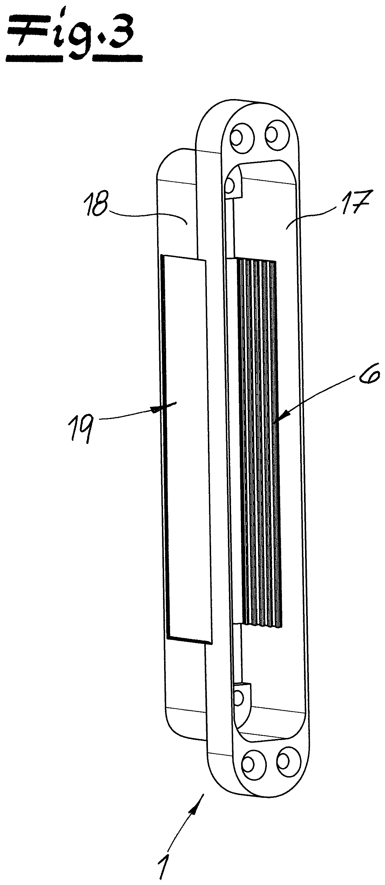

Gemäß der Darstellung in Fig. 3 weist der Aufnahmekörper 1 zwei durch eine Bodenfläche verbundene Seitenwände 17, 18 auf, wobei an einer ersten Seitenwand 17 die gezahnte Lauffläche 6 angeordnet ist und wobei die zweite Seitenwand 18 eine Öffnung 19 aufweist, in welche das bogenförmig gekrümmte Mittelstück 15 des Scharnierbügels 2 eintaucht, wenn der Scharnierbügel 2 die in Fig. 1A dargestellte Schließposition einnimmt. Es resultiert ein kompakter Aufbau des Bandes mit einem schmalen Aufnahmekörper 1.

## Patentansprüche

1. Band für Türen oder Fenster mit einem Aufnahmekörper (1) und mit einem Scharnierbügel (2), der innerhalb des Aufnahmekörpers (1) um eine Gelenkachse (3) drehbeweglich gelagert ist, wobei die Gelenkachse (3) im Aufnahmekörper (1) entlang einer Führungsbahn (4) verschiebbar geführt ist und wobei der Scharnierbügel (2) ein Anschlussende mit einem Zahnkranz (5) aufweist, welcher bei einer Schwenkbewegung des Scharnierbügels (2) um seine Gelenkachse (3) zwischen einer Bandschließstellung und einer Bandöffnungsstellung an einer an der Innenseite des Aufnahmekörpers (1) angeordneten gezahnten Lauffläche (6) abrollt, wobei der Scharnierbügel (2) eine Anschlagfläche (7) aufweist, die in der Bandschließstellung an einer bodenseitigen Fläche (8) des Aufnahmekörpers (1) anliegt, **dadurch gekennzeichnet, dass** der Zahnkranz (5) am Anschlussende des Scharnierbügels (2) die Form einer Parabel oder eines Abschnittes einer Ellipse, deren lange Halbachse in der Bandschließstellung senkrecht zu der gezahnten Lauffläche (6) an der Innenseite des Aufnahmekörpers (1) ausgerichtet ist, aufweist.

2. Band nach Anspruch 1, **dadurch gekennzeichnet, dass** die gezahnte Lauffläche (6) an einer Seitenwand (17) des Aufnahmekörpers (1) angeordnet ist, die sich im Einbauzustand parallel zu einer Tür- oder Fensteröffnung erstreckt.

3. Band nach Anspruch 1 oder 2, **dadurch gekennzeichnet, dass** der Zahnkranz (5) aus einem geräuschdämpfenden Material, vorzugsweise aus Kunststoff, besteht.

4. Band nach einem der Ansprüche 1 bis 3, **dadurch gekennzeichnet, dass** der Aufnahmekörper (1) aus einem Metallgussteil besteht, wobei die gezahnte Lauffläche (6) an dem Metallgussteil angeformt ist.

5. Band nach einem der Ansprüche 1 bis 4, **dadurch gekennzeichnet, dass** an einer oberen Stirnseite (10) und einer unteren Stirnseite (11) des Scharnierbügels (2) jeweils ein Führungselement (12) in Form einer Rolle oder eines Gleitschuhs angeordnet ist, welches in einer am Aufnahmekörper (1) angeordneten Führungsbahn(4) linear beweglich geführt ist.

6. Band nach Anspruch 5, **dadurch gekennzeichnet, dass** der Aufnahmekörper (1) separate Lagereinsätze (13) aufweist, an denen jeweils eine Führungsbahn (4) vorgesehen ist.

7. Band nach einem der Ansprüche 1 bis 6, **dadurch gekennzeichnet, dass** der Scharnierbügel (2) zwischen dem mit dem Zahnkranz (5) versehenen Anschlussende und einem frei vorstehenden Ende (14) ein bogenförmig gekrümmtes Mittelstück (15) aufweist, welches in der Bandöffnungsstellung einen oberen Rand des Aufnahmekörpers (1) umgreift.

8. Band nach Anspruch 7, **dadurch gekennzeichnet, dass** der Aufnahmekörper (1) zwei durch eine Bodenfläche verbundene Seitenwände (17, 18) aufweist, wobei an einer ersten Seitenwand (17) die gezahnte Lauffläche (6) angeordnet ist und wobei die zweite Seitenwand (18) eine Öffnung (19) aufweist, in welche das bogenförmig gekrümmte Mittelstück (15) des Scharnierbügels (2) eintaucht, wenn der Scharnierbügel (2) seine Schließposition einnimmt.

## Claims

1. A hinge for doors or windows comprising a receiving body (1) and comprising a hinge bracket (2), which is supported so as to be capable of rotating about a joint axis (3) inside the receiving body (1), wherein the joint axis (3) is guided in the receiving body (1) so as to be capable of being displaced along a guide track (4), and wherein the hinge bracket (2) has a connection end comprising a gear ring (5), which rolls on a toothed running surface (6) arranged on the inner side of the receiving body (1) in response to a pivoting of the hinge bracket (2) about its joint axis (3) between a hinge closed position and a hinge open position, wherein the hinge bracket (2) has a stop surface (7), which, in the hinge closed position, abuts on a bottom-side surface (8) of the receiving body (1), **characterized in that**, on the connection end of the hinge bracket (2), the gear ring (5) has the shape of a parabola or of a section of an ellipse, the long semimajor axis of which, in the hinge closed position, is oriented perpendicular to the toothed running surface (6) on the inner side of the receiving body (1).

2. The hinge according to claim 1, **characterized in that** the toothed running surface (6) is arranged on a side wall (17) of the receiving body (1), which, in the installed state, extends parallel to a door or window opening.

3. The hinge according to claim 1 or 2, **characterized in that** the gear ring (5) consists of a noise-absorbing material, preferably of plastic.

4. The hinge according to one of claims 1 to 3, **characterized in that** the receiving body (1) consists of a metal casting, wherein the toothed running surface (6) is integrally molded on the metal casting.

5. The hinge according to one of claims 1 to 4, **characterized in that** a guide element (12) in the form of a roller or of a slide shoe, which is guided so as to be linearly movable in a guide track (4), which is arranged on the receiving body (1), is in each case arranged on an upper front side (10) and on a lower front side (11) of the hinge bracket (2).

6. The hinge according to claim 5, **characterized in that** the receiving body (1) has separate bearing inserts (13), on which a guide track (4) is provided in each case.

7. The hinge according to one of claims 1 to 6, **characterized in that** between the connection end, which is provided with the gear ring (5), and a freely protruding end (14), the hinge bracket (2) has an arcuately curved center piece (15), which, in the hinge open position, encompasses an upper edge of the receiving body (1).

8. The hinge according to claim 7, **characterized in that** the receiving body (1) has two side walls (17, 18), which are connected by means of a bottom area, wherein the toothed running surface (6) is arranged on a first side wall (17), and wherein the second side wall (18) has an opening (19), into which the arcuately curved center piece (15) of the hinge bracket (2) dips, when the hinge bracket (2) assumes its closed position.

## Revendications

1. Penture pour porte ou pour fenêtre avec un corps de logement (1) et avec un étrier de charnière (2), qui est logé à l'intérieur du corps de logement (1) en étant mobile en rotation autour d'un axe articulé (3), l'axe articulé (3) étant guidé dans le corps de logement (1) en étant déplaçable le long d'une trajectoire de guidage (4), l'étrier de charnière (2) comportant une extrémité de raccordement avec une couronne dentée (5), laquelle, lors d'un déplacement en pivotement de l'étrier de charnière (2) autour de son axe articulé (3) roule entre une position de fermeture de la penture et une position d'ouverture de la penture sur une surface de roulement (6) placée sur la face intérieure du corps de logement (1), l'étrier de charnière (2) comportant une surface de butée (7) qui dans la position de fermeture de la penture est adjacente à une surface (8) du fond inférieur du corps de logement (1), **caractérisée en ce que** sur l'extrémité de raccordement de l'étrier de charnière (2), la couronne dentée (5) présente la forme d'une parabole ou d'une partie d'une ellipse, dont le demi-axe long est orienté à la perpendiculaire de la surface de roulement (6) dentée sur la face intérieure du corps de logement (1), dans la position de fermeture de la penture.

2. Penture selon la revendication 1, **caractérisée en ce que** la surface de roulement (6) dentée est placée sur une paroi latérale (17) du corps de logement (1), qui en position de montage s'étend à la parallèle d'une ouverture de porte ou de fenêtre.

3. Penture selon la revendication 1 ou 2, **caractérisée en ce que** la couronne dentée (5) est constituée d'une matière absorbant les bruits, de préférence en matière plastique.

4. Penture selon l'une quelconque des revendications 1 à 3, **caractérisée en ce que** le corps de logement (1) est constitué d'une pièce coulée en métal, la surface de roulement (6) dentée étant moulée sur la pièce coulée en métal.

5. Penture selon l'une quelconque des revendications 1 à 4, **caractérisée en ce que** sur une face frontale (10) supérieure et sur une face frontale (11) inférieure de l'étrier de charnière (2) est placé chaque fois un élément de guidage (12) sous la forme d'un galet ou d'un patin glissant, lequel est guidé en étant linéairement mobile dans une trajectoire de guidage (4) placée sur le corps de logement (1).

6. Penture selon la revendication 5, **caractérisée en ce que** le corps de logement (1) comporte des inserts de logement (13) séparés sur lesquels est prévue chaque fois une trajectoire de guidage (4).

7. Penture selon l'une quelconque des revendications 1 à 6, **caractérisée en ce qu'**entre l'extrémité de raccordement pourvue de la couronne dentée (5) et une extrémité (14) librement débordante, l'étrier de charnière (2) comporte une pièce centrale (15) cintrée en forme d'arc qui dans la position d'ouverture de la penture entoure un bord supérieur du corps de logement (1).

8. Penture selon la revendication 7, **caractérisée en ce que** le corps de logement (1) comporte deux parois latérales (17, 18) reliées par une surface de fond inférieur, sur la première paroi latérale (17) étant placée la surface de roulement (6) dentée et la deuxième paroi latérale (18) comportant une ouverture (19) dans laquelle plonge la pièce centrale (15) cintrée en forme d'arc de l'étrier de charnière (2) lorsque l'étrier de charnière (2) adopte sa position de fermeture.
